# EUROPEAN PATENT SPECIFICATION

(11) **EP 1 062 182 B1**
(45) Date of publication and mention of the grant of the patent: **03.11.2004**
(21) Application number: 00902197.3
(22) Date of filing: 13.01.2000
(51) Int. Cl.: C02F 1/44, B01D 61/02, B01D 61/14, A01J 5/00

(54) **A METHOD OF AND AN IMPLEMENT FOR MILKING ANIMALS**
VERFAHREN UND VORRICHTUNG ZUM MELKEN VON TIEREN
PROCEDE ET DISPOSITIF DESTINES A LA TRAITE DES ANIMAUX

(30) Priority: 14.01.1999 NL 1011019
(43) Date of publication of application: 27.12.2000
(73) Proprietor: MAASLAND N.V., 3147 PA Maassluis (NL)
(72) Inventor: POLS, Ronald Maarten, Leicestershire LE14 4AH (GB)
(74) Representative: Corten, Maurice Jean F.M.
(86) International application number: PCT/NL2000/000023
(87) International publication number: WO 2000/041973

(56) References cited:
- WO-A-88/03829
- US-A- 4 105 547
- US-A- 5 338 553
- US-A- 5 762 020
- REIMANN W ET AL: "Ultrafiltration of agricultural waste waters with organic and inorganic membranes" DESALINATION, vol. 109, no. 3, 1 June 1997 (1997-06-01), page 263-267 XP004101928 ISSN: 0011-9164

## Description

The invention relates to a method of filtering waste water containing one or more waste products, which waste water comes from an installation for milking animals, such as cows, according to the preamble of claim 1.

Such a method is known, e.g. from W. Reimann et al: "Ultrafiltration of agricultural waste waters with organic and inorganic membranes", Desalination, vol. 109, no. 3, 1 June 1997.

It is an object of the invention to provide an alternative method for filtering waste water. According to the invention, for that purpose the waste water is heated up before it is conveyed along the membrane. In this manner the filtration process is accelerated so that it will be more effective. Depending on the pore size of the membrane and the pressures applied, the filtrate consists of water, or cleaning and/or disinfecting components and water, or parts of milk, cleaning and disinfecting components and water. Before the waste water is supplied to the membrane, it is preferably filtered by means of a conventional filter for the purpose of removing coarse particles, such as slurry and mud.

The filtrate is preferably re-used for cleaning again the installation for milking animals. Components of the waste water, such as water and/or components of cleaning and/or disinfecting means and/or acid means for removing deposit, are re-used in this manner. This results in a considerable saving of expenses and moreover in a smaller burdening of the environment by the discharge of waste water coming from the milking installation. Components of the cleaning and/or disinfecting means which have been used up during cleaning may be replenished when the filtrate is re-used for cleaning and disinfecting the milking installation. The concentrate may be discharged as waste matter. By filtering the waste water according to the above-described method the amount of pollutants to be discharged strongly decreases. The filtrate may also be discharged as waste matter. As a result of the fact that the filtrate consists substantially of water, the filtrate may be discharged directly into the surface water.

According to an inventive feature, the waste water is circulated in a circuit along one or more membranes. In this manner there is achieved a large waste water treating capacity of the filtration process, without the use of membranes with a very large area being required. Moreover, the membrane is thus prevented from easily clogging up. According to a first embodiment of the invention, during the filtration the waste water and the water are conveyed in equal directions of flow along the membrane. In this manner there is achieved a great filter efficiency. According to an inventive feature, in a preferred embodiment, the waste water and the water are conveyed in opposite directions of flow along the membrane during the filtration. The latter measure is by far the most effective way to make an optimal use of the capacity of the membrane and to prevent the membrane from being contaminated and clogged up.

In a preferred embodiment, the waste water is conveyed along the membrane with such a speed that the flow of the waste water is laminar. In case of a laminar flow of the waste water the membrane operates most efficiently.

In accordance with a particular inventive feature, the waste water is supplied from a milking robot to the membrane. Depending on its size, a milking installation produces approximately 500 litres of waste water per milking. As a result thereof, installations provided with membrane filters will frequently have to be sufficiently dimensioned for being able to treat these quantities of waste water coming from regular milking installations. Therefore, the invention is particularly appropriate to the filtration of waste water which is supplied from a milking robot to a membrane. As the milking robot produces a relatively small quantity of waste water per milking, a compact membrane filtering installation still having sufficient capacity will suffice.

The invention also relates to an implement for milking animals provided with one or more filtering installations according to claim 10. In this manner it is possible to influence the velocity and the effectiveness of the filtration process. For that purpose the filtering installation may comprise a heat exchanger. At one side of the heat exchanger waste water is supplied, while at the other side of the heat exchanger filtrate is supplied. The waste water is heated up by the filtrate which cools down as a result thereof, the waste water is heated up further by means of a heating element and the filtrate is cooled down further by means of a cooling element. The cutting-off means may comprise valves or controllable valves that may be remotely controllable. The conveying means comprise lines or tubes and one or more pumps.

In accordance with a further inventive feature, the filters are provided with at least one membrane having such a pore size that it is suitable for performing reverse osmosis. The pore size of a membrane that is suitable for performing reverse osmosis is smaller than 10⁻⁴ µm. In the situation of reverse osmosis the filtrate consists substantially of water. One or more filtering installations may also be provided with at least one membrane having such a pore size that it is suitable for performing nano-filtration. The pore size of a membrane that is suitable for performing nano-filtration is larger than 10⁻⁴ µm and smaller than 10⁻³ µm. In the case of nano-filtration the filtrate consists substantially of water and minerals, such as components of the cleaning and/or disinfecting means and/or means for removing deposit. According to another inventive feature, the pore size of the membrane is larger than 10⁻³ µm and smaller than 10⁻² µm. In that situation it concerns a membrane which is chosen so as to be suitable for ultrafiltration. In that case the filtrate consists of water, minerals and components of milk, such as lactose. The pore size of the membrane may also be larger than 10⁻¹ µm and smaller than 10 µm. In that case the filtrate consists of water, minerals, lactose and/or proteins and other components, if any, of the waste water. The filtering installation may comprise an assembly of membranes having different pore sizes.

According to an inventive feature, the filtering installation is provided with one or more buffer tanks for storing waste water. Thus it is achieved that the filtering installation is able to treat the waste water continuously, while a large supply or a small supply of waste water does not affect the operation of the installation. The filtering installation may also be provided with one or more reservoirs for storing the filtrate and/or concentrate. In this manner it is achieved that there is no need for discharging the filtrate and/or concentrate immediately.

In a preferred embodiment, the filtering installation is provided with an automatic control unit for controlling the filtration of waste water. In this manner it is possible for the installation to operate continuously without the presence of an operator being required. This is in particular advantageous if the filtering installation is applied in combination with a fully automated milking installation, such as a milking installation comprising a milking robot.

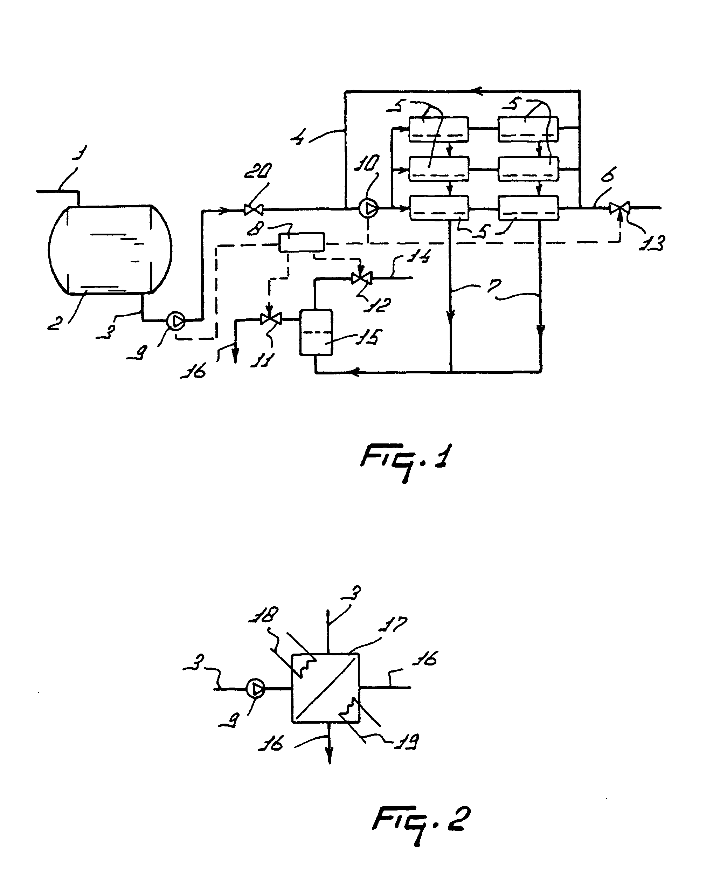

The invention will now be explained in further detail with reference to an embodiment as shown in Figures 1 and 2.

Figure 1 shows a filtering installation to be applied in combination with an installation for milking animals, the latter installation preferably comprising a milking robot.

Figure 2 shows a detail of a heat exchanger to be applied in an installation as shown in Figure 1.

The filtering installation consists of a buffer tank 2, one or more filters 5, a reservoir 15, an automatic control unit 8 for controlling the filtration process and conveying means 1, 3, 4, 6, 7, 9, 10, 16. The conveying means are constituted by the lines 1, 3, 4, 6, 7, 16 and the pumps 9, 10. The buffer tank 2, the filters 5 and the reservoir 15 are connected to each other via the lines 3, 4 and 7 in which the controllable valve 20 and the pumps 9 and 10 are disposed. The supply line 1 is connected to the buffer tank for the supply of waste water. The discharge line 6 with the controllable valve 13 is connected to the ring line 4 around the filters 5 and is used for the discharge of the concentrate. The discharge line 7 is connected to the reservoir 15 and is used for the discharge of the filtrate. The reservoir comprises a line 14 for air supply and a controllable valve 12. Moreover, the reservoir is provided with a discharge line 16 and a controllable valve 11 by means of which the filtrate is discharged from the reservoir. The automatic control unit is connected to the pumps 9 and 10 and the controllable valves 11, 12, 13 and 20.

The operation of the filtering installation as shown in Figure 1 is now described.

The waste water coming from an installation for milking animals is supplied via the line 1 to a buffer tank 2 so that fluctuations in the supply of waste water can be compensated and the filtering installation can operate continuously. Via the pump 9 and the supply line 3 the waste water is brought to circulate in a circuit in which membrane filters 5 are included, while the circuit is constituted by the ring line 4 and the pump 10. The membrane filters 5 comprise several membranes whose pore size may vary. By applying several separate membrane filters it is achieved that defective filters can easily be replaced without the need of stopping the entire filtration process. By means of the controllable valve 13, an amount of concentrate is discharged periodically from the circuit via the discharge line 6. Via the discharge line 7 the filtrate is discharged to a reservoir 15. This reservoir 15 is emptied periodically by supplying compressed air to the reservoir via the supply line 14 in which the controllable valve 12 is included. Via the controllable valve 11 and the discharge line 16 the filtrate may be returned to the milking installation for the purpose of being re-used for cleaning the installation. The entire process is controlled by the automatic control unit 8 to which the controllable valves 11, 12, 13 and 20 and the pumps 9 and 10 are connected.

The filtration of waste water coming from a milking installation may be performed more efficiently when the waste water is heated up with the aid of heating up means before it is . supplied to the membrane filters 5. The heating up means may comprise a heating up element, a cooling element and a heat exchanger. Figure 2 shows a heat exchanger 17 in which the waste water is heated up and the filtrate is cooled down. The heat exchanger is provided with a heating element 18, a cooling element 19, a line 3 for the waste water and a line 16 for the filtrate. In a preferred embodiment, the heat exchanger is disposed in the line 3 between the pump 9 and the valve 20.

Via the supply line 3 and the pump 9 the waste water flows through the heat exchanger 17, while the filtrate flows through the heat exchanger 17 via the discharge line 16, so that the filtrate gives out its warmth to the waste water, the filtrate cools down and the waste water is heated up. The waste water is subsequently heated up further by means of the heating element 18, while the filtrate is cooled down further by means of the cooling element 19. In this manner it is possible to heat up the waste water and to cool down the filtrate while effectively limiting the energy consumption.

## Claims

1. A method of filtering waste water containing one or more waste products, which waste water comes from an implement for milking animals, such as cows, said waste water being conveyed along a first side of a membrane, as a result of which from the first side water and/or one or more waste products are conveyed through the membrane, in such a manner that there is formed a concentrate at the first side of the membrane and a filtrate at the other side of the membrane, the filtrate consisting at least of water, **characterized in that** the waste water is heated up before it is conveyed along the membrane.

2. A method as claimed in claim 1, **characterized in that** the filtrate is re-used for cleaning again the installation for milking animals.

3. A method as claimed in claim 1 or 2, **characterized in that** the filtered concentrate and/or filtrate is discharged as waste matter.

4. A method as claimed in any one of the preceding claims, **characterized in that** the waste water is circulated in a circuit along one or more membranes.

5. A method as claimed in any one of the preceding claims, **characterized in that** the method comprises the step of conveying a liquid, preferably water, along the other side of the membrane.

6. A method as claimed in claim 5, **characterized in that** during the filtration the waste water and the water are conveyed in equal directions of flow along the membrane.

7. A method as claimed in claim 5, **characterized in that** during the filtration the waste water and the water are conveyed in opposite directions of flow along the membrane.

8. A method as claimed in any one of the preceding claims, **characterized in that** during the filtration the waste water is conveyed along the membrane with such a speed that the flow of the waste water is laminar.

9. A method as claimed in any one of the preceding claims, **characterized in that** the waste water is supplied to the membrane from a milking robot for automatically connecting teat cups.

10. An implement for milking animals comprising a milking robot for automatically connecting teat cups, and provided with one or more filtering installations which are suitable for filtering waste water containing one or more waste products, which waste water comes from the implement, said filtering installation comprising one or more filters (5) provided with one or more membranes, as well as one or more cutting-off means (11, 12, 13, 20) and conveying means (1, 3, 4, 6, 7, 9, 10, 16) for conveying waste water, water, filtrate and concentrate, **characterized in that** the filtering installation is provided with heating up means (17, 18) for heating up the waste water.

11. An implement as claimed in claim 10, **characterized in that** one or more filters (5) are provided with at least one membrane having such a pore size that it is suitable for performing reverse osmosis.

12. An implement as claimed in claim 11, **characterized in that** the pore size of the membrane is smaller than 10⁻⁴ µm*.*

13. An implement as claimed in claim 10, **characterized in that** one or more filters (5) are provided with at least one membrane having such a pore size that it is suitable for performing nano-filtration.

14. An implement as claimed in claim 13, **characterized in that** the pore size of the membrane is larger than 10⁻⁴ µm and smaller than 10⁻³ µm.

15. An implement as claimed in claim 10, **characterized in that** the pore size of the membrane is larger than 10⁻³ µm and smaller than 10⁻² µm.

16. An implement as claimed in claim 10, **characterized in that** the pore size of the membrane is larger than 10⁻¹ µm and smaller than 10 µm.

17. An implement as claimed in any one of claims 10-16, **characterized in that** the heating up means (17, 18) comprise a heat exchanger (17).

18. An implement as claimed in any one of claims 10 to 17, **characterized in that** the implement is provided with one or more buffer tanks (2) for storing waste water.

19. An implement as claimed in any one of claims 10 to 18, **characterized in that** the implement is provided with one or more reservoirs (15) for storing the filtrate and/or concentrate.

20. An implement as claimed in any one of claims 10 to 19, **characterized in that** the filtering installation is provided with an automatic control unit (8) for controlling the filtration of waste water.

## Patentansprüche

1. Verfahren zum Filtern von Abwasser, das einen oder mehrere Abfallstoffe enthält, wobei das Abwasser von einer Vorrichtung zum Melken von Tieren, wie z. B. Kühen, kommt, wobei das Abwasser über eine erste Seite einer Membrane geleitet wird, wodurch von der ersten Seite her Wasser und/oder ein oder mehrere Abfallstoffe durch die Membrane geleitet werden, derart, daß auf der ersten Seite der Membrane ein Konzentrat und auf der anderen Seite der Membrane ein Filtrat gebildet wird, wobei das Filtrat zumindest aus Wasser besteht,
**dadurch gekennzeichnet, daß** das Abwasser erhitzt wird, bevor es über die Membrane geleitet wird.

2. Verfahren nach Anspruch 1,
**dadurch gekennzeichnet, daß** das Filtrat wiederverwendet wird, um die Vorrichtung zum Melken von Tieren zu reinigen.

3. Verfahren nach Anspruch 1 oder 2,
**dadurch gekennzeichnet, daß** das gefilterte Konzentrat und/oder das Filtrat als Abfall abgeleitet werden.

4. Verfahren nach einem der vorhergehenden Ansprüche,
**dadurch gekennzeichnet, daß** das Abwasser in einem Kreislauf durch eine oder mehrere Membranen geleitet wird.

5. Verfahren nach einem der vorhergehenden Ansprüche,
**dadurch gekennzeichnet, daß** das Verfahren den Verfahrensschritt umfaßt, eine Flüssigkeit, vorzugsweise Wasser, über die andere Seite der Membrane zu leiten.

6. Verfahren nach Anspruch 5,
**dadurch gekennzeichnet, daß** während der Filtration das Abwasser und das Wasser in derselben Strömungsrichtung über die Membrane geleitet werden.

7. Verfahren nach Anspruch 5,
**dadurch gekennzeichnet, daß** während der Filtration das Abwasser und das Wasser in entgegengesetzten Strömungsrichtungen über die Membrane geleitet werden.

8. Verfahren nach einem der vorhergehenden Ansprüche,
**dadurch gekennzeichnet, daß** während der Filtration das Abwasser mit einer solchen Geschwindigkeit über die Membrane geleitet wird, daß die Strömung des Abwassers laminar ist.

9. Verfahren nach einem der vorhergehenden Ansprüche,
**dadurch gekennzeichnet, daß** das Abwasser der Membrane von einem Melkroboter zum automatischen Anschließen von Zitzenbechern zugeführt wird.

10. Vorrichtung zum Melken von Tieren, die einen Melkroboter zum automatischen Anschließen von Zitzenbechern umfaßt und mit einer oder mehreren Filtervorrichtungen versehen ist, die geeignet sind, Abwasser mit einem oder mehreren Abfallstoffen zu filtern, wobei das Abwasser von der Vorrichtung kommt, wobei die Filtervorrichtung einen oder mehrere Filter (5) umfaßt, die mit einer oder mehreren Membranen versehen sind, sowie eine oder mehrere Absperrvorrichtungen (11, 12, 13, 20) und Beförderungsvorrichtungen (1, 3, 4, 6, 7, 9, 10, 16) zum Befördern von Abwasser, Wasser, Filtrat und Konzentrat,
**dadurch gekennzeichnet, daß** die Filtervorrichtung mit Aufheizvorrichtungen (17, 18) zum Aufheizen des Abwassers versehen ist.

11. Vorrichtung nach Anspruch 10,
**dadurch gekennzeichnet, daß** ein oder mehrere Filter (5) mit mindestens einer Membrane versehen sind, die eine solche Porengröße hat, daß sie zur Durchführung der Umkehrosmose geeignet ist.

12. Vorrichtung nach Anspruch 11,
**dadurch gekennzeichnet, daß** die Porengröße der Membrane kleiner als 10⁻⁴ µm ist.

13. Vorrichtung nach Anspruch 10,
**dadurch gekennzeichnet, daß** ein oder mehrere Filter (5) mit mindestens einer Membrane versehen sind, die eine solche Porengröße hat, daß sie zur Durchführung der Nanofiltration geeignet ist.

14. Vorrichtung nach Anspruch 13,
**dadurch gekennzeichnet, daß** die Porengröße der Membrane größer als 10⁻⁴ µm und kleiner als 10⁻³ µm ist.

15. Vorrichtung nach Anspruch 10,
**dadurch gekennzeichnet, daß** die Porengröße der Membrane größer als 10⁻³ µm und kleiner als 10⁻² µm ist.

16. Vorrichtung nach Anspruch 10,
**dadurch gekennzeichnet, daß** die Porengröße der Membrane größer als 10⁻¹ µm und kleiner als 10 µm ist.

17. Vorrichtung nach einem der Ansprüche 10 bis 16,
**dadurch gekennzeichnet, daß** die Aufheizvorrichtungen (17, 18) einen Wärmetauscher (17) umfassen.

18. Vorrichtung nach einem der Ansprüche 10 bis 17,
**dadurch gekennzeichnet, daß** die Vorrichtung mit einem oder mehreren Pufferbehältern (2) zur Aufnahme von Abwasser versehen ist.

19. Vorrichtung nach einem der Ansprüche 10 bis 18,
**dadurch gekennzeichnet, daß** die Vorrichtung mit einem oder mehreren Behältern (15) zur Aufnahme des Filtrats und/oder Konzentrats versehen ist.

20. Vorrichtung nach einem der Ansprüche 10 bis 19,
**dadurch gekennzeichnet, daß** die Filtervorrichtung mit einer automatischen Steuereinheit (8) zum Steuern der Filtration des Abwassers versehen ist.

## Revendications

1. Procédé de filtration des eaux usées contenant un ou plusieurs produits de résidus, lesquelles eaux usées proviennent d'un outil destiné à la traite des animaux, telles que les vaches, lesdites eaux usées étant acheminées le long d'un premier côté d'une membrane, il en résulte que depuis le premier côté, de l'eau et/ou un ou plusieurs produits de résidus sont acheminés à travers la membrane, d'une telle manière qu'un concentré se forme sur le premier côté de la membrane et un filtrat de l'autre côté de la membrane, le filtrat consistant en au moins de l'eau, **caractérisé en ce que** les eaux usées sont chauffées avant d'être acheminées le long de la membrane.

2. Procédé selon la revendication 1, **caractérisé en ce que** le filtrat est réutilisé pour nettoyer de nouveau l'installation destinée à la traite des animaux.

3. Procédé selon la revendication 1 ou 2, **caractérisé en ce que** le concentré filtré et/ou le filtrat est déchargé en tant que matière résiduelle.

4. Procédé selon l'une quelconque des revendications précédentes, **caractérisé en ce que** les eaux usées circulent dans un circuit le long d'une ou de plusieurs membranes.

5. Procédé selon l'une quelconque des revendications précédentes, **caractérisé en ce que** le procédé comprend l'étape d'acheminement d'un liquide, de préférence de l'eau le long de l'autre côté de la membrane.

6. Procédé selon la revendication 5, **caractérisé en ce que** pendant la filtration, les eaux usées et l'eau sont acheminées dans des directions égales d'écoulement le long de la membrane.

7. Procédé selon la revendication 5, **caractérisé en ce que** pendant la filtration des eaux usées et de l'eau sont acheminées dans des directions opposées d'écoulement le long de la membrane.

8. Procédé selon l'une quelconque des revendications précédentes, **caractérisé en ce que** pendant la filtration, des eaux usées sont acheminées le long de la membrane avec une telle vitesse que l'écoulement des eaux usées est laminaire.

9. Procédé selon l'une quelconque des revendications précédentes, **caractérisé en ce que** les eaux usées sont alimentées vers la membrane depuis un robot de traite qui permet de raccorder de façon automatique les gobelets trayeurs.

10. Outil destiné à la traite des animaux, comprenant un robot de traite pour raccorder automatiquement les gobelets trayeurs, et muni d'une ou de plusieurs installations de filtration qui sont adaptées pour filtrer les eaux usées contenant un ou plusieurs produits de résidus, lesquelles eaux usées proviennent de l'outil, ladite installation de filtration comprenant un ou plusieurs filtres (5) munis d'une ou de plusieurs membranes, ainsi qu'un ou plusieurs moyens de coupe (11, 12, 13, 20) et des moyens d'acheminement (1, 3, 4, 6, 7, 9, 10, 16) pour acheminer les eaux usées, l'eau, le filtrat et le concentré, **caractérisé en ce que** l'installation de filtration est munie de moyens de chauffage (17, 18) pour chauffer les eaux usées.

11. Outil selon la revendication 10, **caractérisé en ce qu'**un ou plusieurs filtres (5) sont munis d'au moins une membrane ayant une telle dimension des pores qui est adaptée pour exécuter une osmose inverse.

12. Outil selon la revendication 11, **caractérisé en ce que** la dimension des pores de la membrane est plus petite que 10⁻⁴ µm.

13. Outil selon la revendication 10, **caractérisé en ce qu'**un ou plusieurs filtres (5) sont munis d'au moins une membrane ayant une dimension de pores adaptée pour exécuter la nano filtration.

14. Outil selon la revendication 13, **caractérisé en ce que** la dimension des pores de la membrane est plus grande que 10⁻⁴ µm et plus petite que 10⁻³ µm.

15. Outil selon la revendication 10, **caractérisé en ce que** la dimension des pores de la membrane est plus grande que 10⁻³ µm et plus petite que 10⁻² µm.

16. Outil selon la revendication 10, **caractérisé en ce que** la dimension des pores de la membrane est plus grande que 10⁻¹ µm et plus petite que 10 µm.

17. Outil selon l'une quelconque des revendications 10 à 16, **caractérisé en ce que** les moyens de chauffage (17, 18) comprennent un échangeur thermique (17).

18. Outil selon l'une quelconque des revendications 10 à 17, **caractérisé en ce que** l'outil est muni d'un ou plusieurs bacs tampons (2) destinés à stocker les eaux usées.

19. Outil selon l'une quelconque des revendications 10 à 18, **caractérisé en ce que** l'outil est muni d'un ou de plusieurs réservoirs (15) destinés à stocker le filtrat et/ou le concentré.

20. Outil selon l'une quelconque des revendications 10 à 19, **caractérisé en ce que** l'installation de filtration est munie d'une unité de commande automatique (8) destinée à commander la filtration des eaux usées.
